Europäisches Patentamt

European Patent Office

Office européen des brevets

(11) Publication number: **0 091 112**
**A2**

## (12) EUROPEAN PATENT APPLICATION

(21) Application number: **83103258.6**

(22) Date of filing: **05.04.83**

(51) Int. Cl.³: **G 06 K 7/10**
**G 06 K 7/14**

(30) Priority: **06.04.82 IT 2061782**

(43) Date of publication of application:
**12.10.83 Bulletin 83/41**

(84) Designated Contracting States:
**AT BE CH DE FR GB LI LU NL SE**

(71) Applicant: **AGES ITALIA S.p.A.**
**Via Castelletto 6**
**I-28040 Borgoticino(Province of Novara)(IT)**

(72) Inventor: **Colombo, Gianni**
**Via Lazzaretto**
**I-28040 Borgoticino (Province of Novara)(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Optical bar code reader.

(57) This invention concerns an optical reader for bar codes characterized in that it comprises, located inside an enclosing housing (1), a linear motor provided with a guide rod (2) on which a moving coil (10) is slidably arranged which carries an objective lens (31) to which at least one illuminator (32) is connected for scanning a bar code provided on a card or the like which can be positioned on a fixed readout plane (35) by means of a guide slot (36) defined on said enclosing housing (1). Said objective lens is operatively connected to a detector (42) carried on a plate (40) which is connected to said moving coil (10).

Fig.2

# OPTICAL BAR CODE READER

This invention relates to an optical bar code reader.

It is well known that various solutions have been made commercially available to the problem of reading bar codes, and among these, known is the so-called pencil reader which has essentially the general configuration of a pencil, intended to be passed over a bar code through skilful application by the user. For this reason, it is not to be recommended for occasional users but only for specially trained personnel made familiar with it.

Another embodiment of an optical reader provides for the document to be moved past a fixed optical system. Also in this case, the reading movement coincides with the input movement and provides, in general, good results, better than the pencil variety, but is not yet quite satisfactory where the user is unfamiliar with it.

A further form is that of an optical reader equipped with a rotating mirror, wherein the document is held stationary and the reading movement occurs by rotation of an internal device. That construction involves fairly high space requirements and the provision of a rotary member which may generate noise and dissipation; moreover, a lamp of some power is required to illuminate the code.

Still another form includes the so-called TV camera, Vidicon, or solid state readers. Such readers are stationary ones and effect the code scanning automatically, but require a relatively high power illumination, a precision optics, and are expensive.

A primary object of this invention is to provide an optical reader for bar codes of novel design, which allows a card or document carrying the bar code to be read out which is positioned stationary, reading being accomplished by the simple translation of a detector, thereby a reader of compact construction and size is provided.

Another object of the invention is to provide a reader which practically simulates the manual scanning movement through a mechanism including a limited number, and above all few types, of component parts, and having a single-direction main extension.

It is a further object of this invention to provide a reader which is highly reliable and has low dissipation, to thus contribute to its capillary penetration in the market.

These and other objects, such as will be apparent hereinafter, are achieved by an optical reader for bar codes, according to the invention, characterized in that it comprises, within an enclosing housing, a linear motor having a guide rod on which a moving coil is mounted slidably, said moving coil supporting an objective lens whereto at least one illuminator is connected for scanning a bar code provided on a card or the like which may be positioned on a fixed readout surface through a guide slot defined in said enclosing housing, a detector being operatively connected to said objective lens.

positioning of the guide rod 2 and shell halves 3 and 4 to accommodate the moving element therethrough.

The interspace, indicated at 6, provided between the rod 2 and shell halves 3 and 4, constitutes the return path for the flux generated by the magnets, which have all their equal poles arranged to face the guide rod 2.

Mounted slidable on the guide rod 2 is a moving coil 10, which has on its interior portion guide shoes 11 in engagement with the side faces of the rod 2, the latter being advantageously provided with a rectangular cross-section configuration.

In contact engagement with the top and bottom faces of the guide rod 2 is a contact element 12 which is connected to the moving coil 10.

The moving coil 10 has on its interior a conductive material 20, which may be copper, or alternatively, aluminium in order to lower the moving weights.

Located in the proximity of the rod ends, substantially in contact with the magnets 5, are dampers 15, which may advantageously comprise simple pads of sponge rubber or other elastic material.

Provided rigidly with the coil, is a telescope 30 which comprises an objective lens 31 for effecting a mechanical scanning of the bar code, which objective lens operates at a very small angle of coverage and may, therefore, include a simple and inexpensive lens.

Close to the area of the lens 31, there is provided a first illuminator 32, preferably of the

0091112

solid state type, which illuminates the document solely at the area thereof to be read out, since illumination moves along with reading and, hence, requires but a small power, which brings about consequent advantages of dissipation and durability.

A second illuminator 33 may also be provided where it is necessary to illuminate the document at a different  frequency or "color" of the light in order to discriminate either the type of ink or type of background and effect further possible checks on the type of input document.

The device is positioned at, and above, a readout surface 35 on which the card or document to be read can be fixedly placed following its introduction through a guide slot 36 provided in the enclosing housing 1.

At the other end, the telescope 30 is terminated with a support 40 which carries a detector 42, on which the lens will image the code as it is scanned.

Advantageously, a magnification of 2x can be conveniently used because it would improve the code reading.

The support 40 carries also a field diaphragm 43 in order to better define the image longitudinally.

Provided on the plate 40 is a printed circuit 45 carrying the connections to the coil, illuminator(s), detector, and takes them to a connector 50, in turn interconnected with a flat cable 51 which is connected to the stationary portion of the apparatus.

This optical reader is quite simple to operate. In fact, by inserting a card, document, or the like, showing a bar code, through the guide slot, the linear

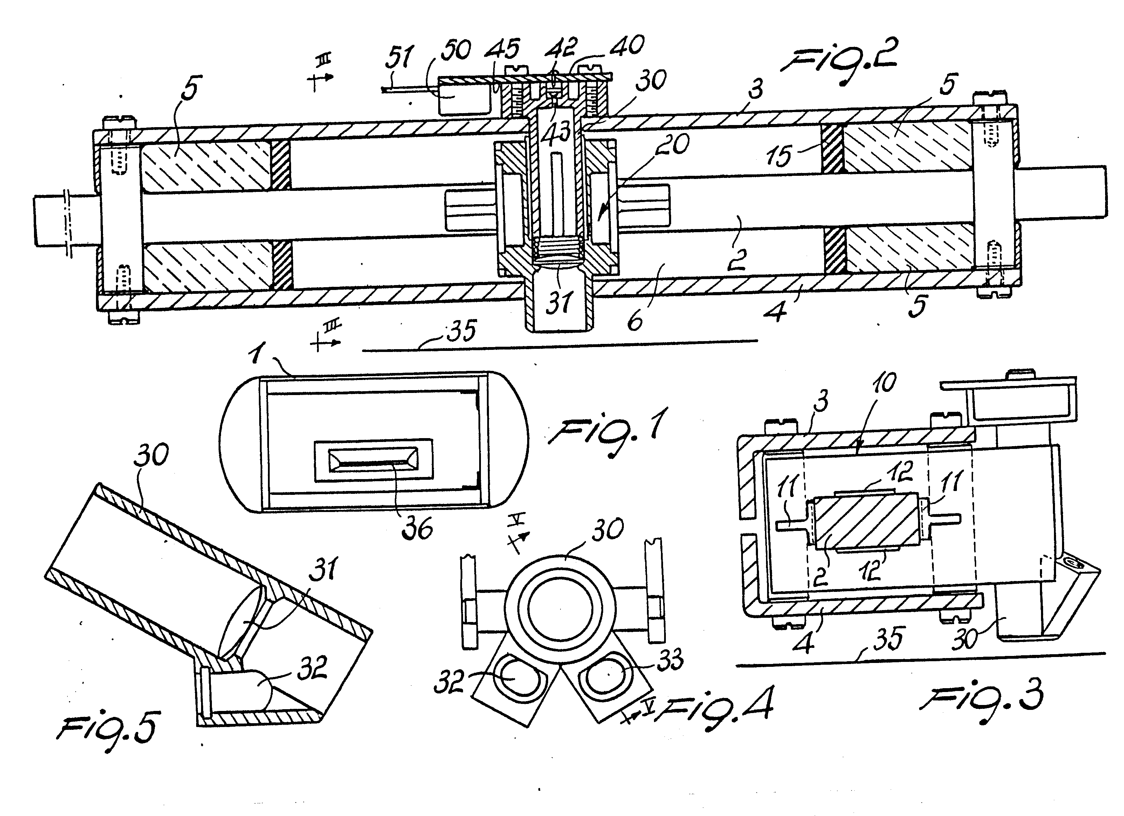

## CLAIMS

1. An optical reader for bar codes, characterized in that it comprises, within an enclosing housing (1), a linear motor having a guide rod (2) on which a moving coil (10) is mounted slidably, said moving coil (10) supporting an objective (31) whereto at least one illuminator (32) is connected for scanning a bar code provided on a card of the like which may be positioned on a fixed readout surface (35) through a guide slot (36) defined in said enclosing housing (1), a detector (42) being operatively connected to said objective (31).

2. An optical reader according to Claim 1, characterized in that it comprises an upper shell half (3) and lower shell half (4) encircling said rod (2) in spaced apart relationship therewith, at the end of said rod (2) there being provided magnets (5) adapted to function as spacers between said rod (2) and said shell halves (3,4).

3. An optical reader according to the preceding claims, characterized in that it comprises, in contact with said magnets (5), dampers (15) for stopping the translatory movement of said moving coil (10).

4. An optical reader according to one or more of the preceding claims, characterized in that said objective comprises a lens (31) positioned in a telescope (30) carried on said moving coil (10) and being connected, at the opposed end with respect to said lens (31), to a support plate (40) carrying said detector (42).

5. An optical reader according to one or more of the preceding claims, characterized in that it comprises a first illuminator (32) and second illuminator (33) of the solid state type and positioned on said telescope (30) at said lens (31) for selectively illuminating the area read by said objective lens (31).

6. An optical reader according to one or more of the preceding claims, characterized in that it comprises, associated with said support plate (40), a printed circuit (45) including the electric connections for said coil (10), said illuminators (32,33), and said detector (42), for connecting to a connector (50), in turn associated with a flat cable (51) connected to the stationary portions of the apparatus.

7. An optical reader for bar codes, according to the preceding claims and substantially as herein described and illustrated.

0091112

Fig.1

Fig.2

Fig.3

Fig.4

Fig.5